Europäisches Patentamt

European Patent Office

Office européen des brevets

(11) Veröffentlichungsnummer: **0 381 127**
**A2**

# (12) EUROPÄISCHE PATENTANMELDUNG

(21) Anmeldenummer: 90101775.6

(51) Int. Cl.⁵: **B68G 7/10, D06H 5/00**

(22) Anmeldetag: **30.01.90**

(30) Priorität: 02.02.89 DE 3903129
05.08.89 DE 3925998

(43) Veröffentlichungstag der Anmeldung:
**08.08.90 Patentblatt 90/32**

(84) Benannte Vertragsstaaten:
**ES FR GB IT SE**

(71) Anmelder: **GRAMMER AG**
**Wernher-von-Braun-Strasse 6**
**D-8450 Amberg/Opf.(DE)**

(72) Erfinder: **Pajer, Pavel**
**Hammergutstrasse 34**
**D-8457 Kümmersbruck(DE)**
Erfinder: **Birner, Franz**
**Ehrenfeld 172**
**D-8452 Hirschau(DE)**

(74) Vertreter: **LOUIS, PÖHLAU, LOHRENTZ &**
**SEGETH**
**Kesslerplatz 1 Postfach 3055**
**D-8500 Nürnberg-1(DE)**

(54) **Hinterschäumtes Polster, Verfahren zur Herstellung eines derartigen Polsterteils und Vorrichtunng zur Durchführung des Verfahrens.**

(57) Es wird ein hinterschäumtes Polsterteil sowie ein Verfahren zur Herstellung eines solchen Polsterteils und eine Vorrichtung zur Durchführung dieses Verfahrens beschrieben, wobei ein mehrteiliger Bezug mittels eines Abdichtbandes (18) abgedichtet wird. Dabei wird entlang der Bezugsteile (28) und entlang der die Bezugsteile verbindenden gemeinsamen Naht (48) auf die an die Naht angrenzenden Randabschnitte (40) der Bezugsteile (28) des Bezuges ein Abdichtband (18) aufgebracht und mit den Randabschnitten (40) abdichtend verbunden. Die Bezugsteile (28) werden mit ihren Randabschnitte (40) umgefaltet, wobei die Naht (48) die Faltkante bildet. Das mindestens eine Abdichtband (18) wird an den umgefalteten Randabschnitten (40) der Bezugsteile (28) angeordnet und mit den umgefalteten Randabschnitten (40) abdichtend verbunden.

FIG.5

EP 0 381 127 A2

## Hinterschäumtes Polsterteil und Verfahren zur Herstellung eines derartigen Polsterteils

Die Erfindung betrifft ein hinterschäumtes Polsterteil gemäss dem Oberbegriff des Anspruchs 1 oder des Anspruchs 2 sowie ein Verfahren zur Herstellung eines solchen Polsterteils gemäss dem Oberbegriff des Anspruchs 3 oder des Anspruchs 4.

Aus der Praxis ist es bekannt, die Abdichtbänder über der die Bezugsteile miteinander verbindenden Naht anzuordnen und an den an die Naht angrenzenden Randabschnitten der Bezugsteile abdichtend zu befestigen, um die Naht zwischen den Bezugsteilen abzudichten. Hierbei ist nicht sicher zu verhindern, dass die Abdichtung unzureichend ist.

Die DE 36 00 049 A1 beschreibt ein Verfahren zum Anbringen von Nahtabdichtungsbändern an Inlettplattenzuschnitten für von aussen zu übersteppende Daunendecken, wobei die Nahtabdichtungsbänder auf der Innenseite des Inlettplattenzuschnitts unter gegenseitigem Abstand in Längs-und Querrichtung mittels eines thermisch aktivierbaren Klebers aufgeklebt werden. Dort wird der Kleber in einer oder mehreren schmalen linienförmigen Klebebereichen entweder in einer Vorfertigung einseitig auf ein zu verwendendes Nahtdichtungsband aufgebracht oder erst beim Auflegen desselben in den Zwischenbereich zwischen diesem und dem Inlettplattenzuschnitt eingebracht. Der Kleber wird beim fortlaufenden Auflegen des Nahtdichtungsbandes auf den Inlettplattenzuschnitt durch direkte Wärmezufuhr in den Zwischenbereich aktiviert.

Aus der DE 33 36 356 A1 ist ein Verfahren insbes. zum mehrfachen Falten und Verfestigen der Längs- und/oder Querkanten von aus fortlaufenden Bahnen geschnittenen Gewebestücken o.dgl. bekannt, wobei diese Vorrichtung aus einem ersten Flachpressrollenpaar besteht, an welches sich in Förderrichtung des Gewebestückes eine Vorfalteinrichtung, ein zweites Flachpressrollenpaar, eine Fertigfalteinrichtung und ein drittes Flachpressrollenpaar anschliessen. Dort laufen alle Rollenpaare zueinander synchron um. Die Falteinrichtungen haben jeweils einen an der Unterseite des umzufaltenden Gewebestück-Randteiles angreifenden und zum Gewebestückvorschub synchron wirksamen Stetigförderer, der so über die Pressebene der miteinander tangierenden Flachpressollen hinausragt, dass der Stetigförderer zusätzlich die Faltung einleitet. Ferner ist neben dem Stetigförderer ein stationärer, auf die Oberseite eines Gewebestückes wirksamer flacher Niederhalter vorgesehen, dessen dem zu faltenden Gewebestückrand zugewandte Längsseite in Richtung der zu bildenden Faltkante angeordnet ist. Oberhalb des vorgenannten ersten Stetigförderers ist ein zweiter, vom Einleitungsbereich der Faltung mindestens bis in den Pressbereich des in Gewebestück-Förderrichtung folgenden Flachpressrollenpaares sich erstreckender und am Faltrandteil angreifender Stetigförderer vorgesehen, der ausserhalb des Gewebestückes beginnt und die Faltkante kreuzend angeordnet ist.

Der Erfindung liegt die Aufgabe zugrunde, ein hinterschäumtes Polsterteil sowie ein Verfahren der eingangs genannten Art zur Herstellung eines solchen Polsterteils zu schaffen, wobei die Abdichtung der die Bezugsteile miteinander verbindenden Nähte sicher gewährleistet wird.

Diese Aufgabe wird durch die Merkmale des kennzeichnenden Teiles des Anspruchs 1 oder 2 bzw. durch die Merkmale des kennzeichnenden Teiles der Ansprüche 3 oder 4 gelöst.

Durch die Umfaltung der an die gemeinsame Naht angrenzenden Randabschnitte der Bezugsteile ergibt sich eine gute Zugänmglichkeit zur abzudichtenden Naht. Durch die Umfaltung des Abdichtbandes in Längsrichtung wird der Vorteil erzielt, dass eine sichere Verbindung des umgefalteten Abdichtbandes mit den die Naht als Faltkante enthaltenden Randabschnitten der Bezugsteile gewährleistet wird, so dass jederzeit und reproduzierbar eine gute Abdichtung der Naht gegeben ist. Nach der Verbindung der Bezugsteile mit dem Abdichtband, d.h. nach der Abdichtung der die Bezugsteile miteinander verbindenden Naht kann die Zusammenfaltung der Bezugsteile selbstverständlich wieder aufgehoben werden, d.h. die Bezugsteile können wieder in eine gemeinsame Ebene aufgespannt werden, um den derartig vorbereiteten Bezug in einem nachfolgenden Arbeitsgang in eine Form einzubringen, in welcher der Bezug zur Herstellung eines Polsterteils mit einem Reaktionsgemisch hinterschäumt wird.

Anstelle einer Umfaltung des Abdichtbandes ist es auch möglich, dass zwei voneinander unabhängige Abdichtbänder an den umgefalteten Randabschnitten der Bezugsteile angeordnet und mit den umgefalteten Randabschnitten der Bezugsteile abdichtend verbunden werden, wobei Längsrandbereiche der beiden Abdichtbänder über die Randabschnitte der Bezugsteile überstehen und miteinander abdichtend verbunden werden.

Als zweckmässig hat es sich erwiesen, wenn die Bezugsteile an einem vor einer Führungsscheibe angeordneten Zentrierschwert umgefaltet werden, wobei die Naht der Bezugsteile auf die Schneide des Zentrierschwertes aufgelegt und der umgefaltete Bezug entlang der Schneide des Zentrierschwertes der Führungsscheibe zugeführt wird. Hierbei kann das Abdichtband an einer abgewinkelten Führungseinrichtung entlangbewegt und umgefaltet werden, und die umgefalteten Bezugsteile und das die Naht der Bezugsteile überdeckende umgefaltete Abdichtband können gemeinsam mit den umgefalteten Randabschnitten der Bezugsteile zwischen einer Andrückeinrichtung durchbewegt werden, in welcher das umgefaltete Abdichtband mit den die gemeinsame Naht aufweisenden Randabschnitten der Bezugsteile abdichtend verbunden wird. Das umgefaltete Abdichtband kann hierbei mit seiner Faltkante an der die Faltkante bildenden Naht der Bezugsteile eng anliegen oder vorzugsweise von der Naht einen Abstand aufweisen. Dieser Abstand zwischen der Faltkante des Abdichtbandes und der die Faltkante bildenden Naht der Bezugsteile ist bei der Herstellung eines hinterschäumten Polsterteiles deshalb vorteilhaft, weil der hierbei zwischen der Naht und der Faltkante des Abdichtbandes gegebene entlang der Naht der Bezugsteile verlaufende Steg sich im Inneren des hinterschäumten Polsterteiles befindet und somit für die Verbindungsnaht zwischen den Bezugsteilen eine Verankerung bilden kann.

Es ist jedoch auch möglich, dass die beiden Abdichtbänder an zugehörigen Führungseinrichtungen geführt entlangbewegt und gemeinsam mit den umgefalteten Randabschnitten der Bezugsteile zwischen einer Andrückeinrichtung durchbewegt werden, in der die beiden Abdichtbänder mit den die gemeinsame Naht aufweisenden Randabschnitten der Bezugsteile und entlang ihrer über die Randabschnitte der Bezugsteile überstehenden Längsrandbereiche miteinander abdichtend verbunden werden. Hierbei wird eine Umfaltung des Abdichtbandes vermieden.

Um einen Verzug zwischen den miteinander verbundenen Bezugsteilen des Bezuges und dem Abdichtband zu verhindern, werden die umgefalteten Bezugsteile mit der gemeinsamen Naht und das mindestens eine Abdichtband vorzugsweise mit einander entsprechenden Vorschubgeschwindigkeiten zwischen der Andrückeinrichtung durchbewegt. Bei dieser Andrückeinrichtung kann es sich bspw. um oszillierende Stempel handeln, zwischen welchen die Bezugsteile und das Abdichtband schrittweise durchbewegt werden. Hierbei ist die Durchsatzgeschwindigkeit jedoch begrenzt. Deshalb ist es vorteilhaft, wenn als Andrückeinrichtung ein Paar Antriebsrollen verwendet werden, die aneinander anliegen und die sich mit einer der Vorschubgeschwindigkeit der Bezugsteile und des/jedes Abdichtbandes entsprechenden Geschwindigkeit gegeneinander drehen. Auf diese Weise ergibt sich eine kontinuierliche Durchsatzbewegung der Bezugsteile und des/jedes Abdichtbandes zwischen der Andrückeinrichtung hindurch, wobei das umgefaltete Abdichtband bzw. die beiden Abdichtbänder mit Hilfe der beiden Antriebsrollen abdichtend gegen die Randabschnitte der Bezugsteile gepresst wird.

Das Abdichtband kann mit einer Klebeschichtung versehen sein, bei welcher es sich um einen Heisskleber handelt. In diesem Fall ist es zweckmässig, wenn das mindestens eine Abdichtband mittels einer in der Nachbarschaft der Andrückeinrichtung in deren Zufuhrabschnitt vorgesehenen Heizungseinrichtung erhitzt wird. Selbstverständlich ist es auch möglich, ausser dem/jedem Abdichtband auch die Randabschnitte der miteinander verbundenen Bezugsteile zu erwärmen. Mit Hilfe der Heizungseinrichtung kann dem/jedem Abdichtband eine derartige Wärmemenge zugeführt werden, dass es anschmilzt und mit Hilfe der Andrückeinrichtung gegen die Randabschnitte der Bezugsteile gepresst wird, um zwischen dem Abdichtband und den Randabschnitten der Bezugsteile eine abgedichtete mechanisch feste Verbindung herzustellen und gegebenenfalls auch die beiden Abdichtbänder miteinander fest und abdichtend zu verbinden.

Ein Ausführungsbeispiel der erfindungsgemässen Vorrichtung zur Durchführung des erfindungsgemässen Verfahrens zum Abdichten von miteinander entlang einer Verbindungsnaht verbundenen Bezugsteilen hinterschäumter Polsterteile ist in der Zeichnung schematisch dargestellt und wird nachfolgend beschrieben. Es zeigt:

Fig. 1 eine Ansicht der Vorrichtung von der Seite,

Fig. 2 eine Ansicht der Vorrichtung in Blickrichtung des Pfeiles II in Fig. 1,

Fig. 3 eine vergrösserte Darstellung des Details III in Fig. 2,

Fig. 4 eine räumliche Darstellung der Führungseinrichtung zum Führen und Umfalten des Abdichtbandes,

Fig. 5 eine räumliche Darstellung der Vorrichtung zum Abdichten von miteinander mittels einer Naht verbundenen Bezugsteilen,

Fig. 6 eine der Fig. 5 entsprechende räumliche Darstellung einer zweiten Ausführungsform der Vorrichtung zum Abdichten von miteinander mittels einer Naht verbundenen Bezugsteilen, und

Fig. 7 einen der Fig. 3 entsprechenden Detailausschnitt zweier miteinander verbundener abgedichteter Bezugsteile,wobei auf die Darstellung der in Fig. 3 gezeichneten Antriebsrollen verzichtet worden ist.

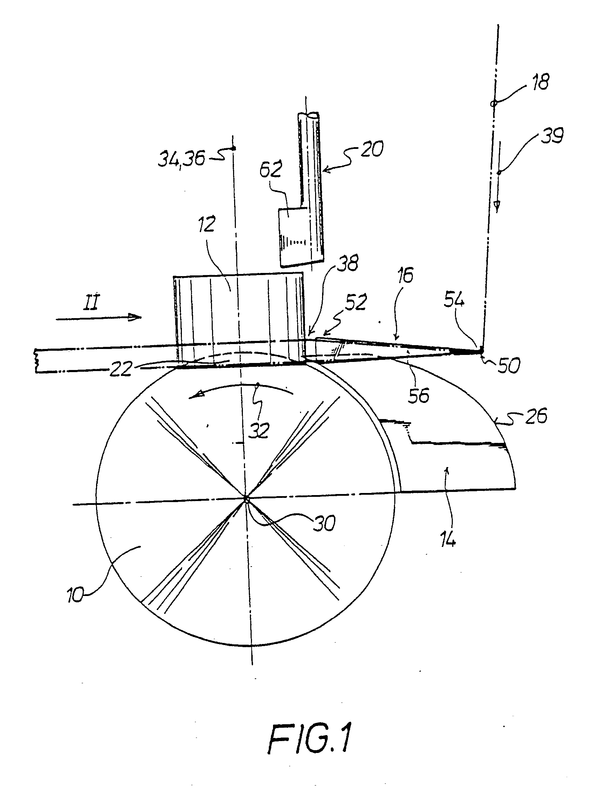

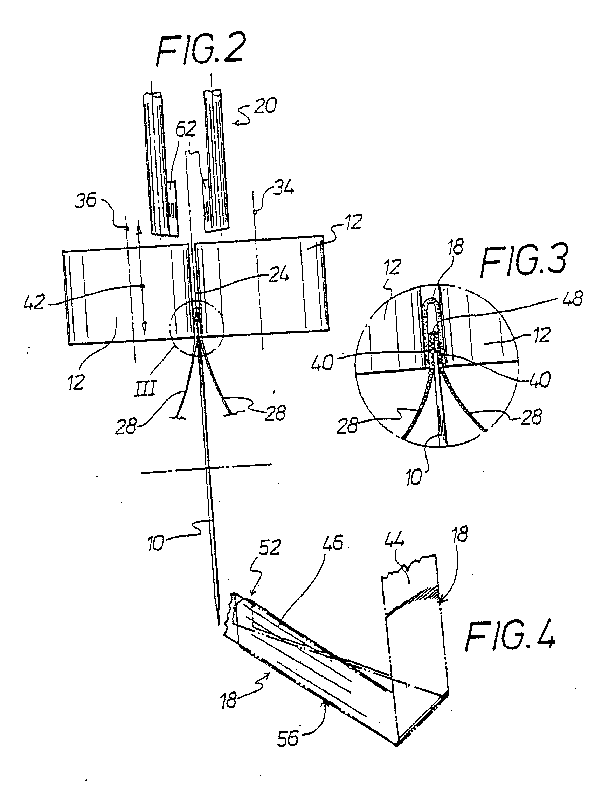

Die Figuren 1 und 2 zeigen eine Führungsscheibe 10, neben der ein Zentrierschwert 14 angeordnet ist, das mit der Führungsscheibe 10 fluchtet. In der Nachbarschaft des Zentrierschwertes 14 und von diesem um einen bestimmten Abstand beabstandet ist eine Führungseinrichtung 16 vorgesehen, die zum Führen und Umfalten eines Abdichtbandes 18 dient. Mit der Bezugsziffer 20 ist eine Heizungseinrichtung bezeichnet, die in der Nachbarschaft der Antriebsrollen 12 vorgesehen ist. Die Führungsscheibe 10 erstreckt sich mit einem Flächenabschnitt 22 in den Spalt 24 zwischen den beiden Antriebsrollen 12 hinein.

Das Zentrierschwert 14 ist mit einer Schneide 26 ausgebildet entlang welcher die mittels einer Verbindungsnaht 48 (sh. Fig. 3) miteinander verbundenen Bezugsteile 28 geführt und umgefaltet der Führungsscheibe 10 zugeführt und zwischen den beiden Antriebsrollen 12 durchgeleitet werden.

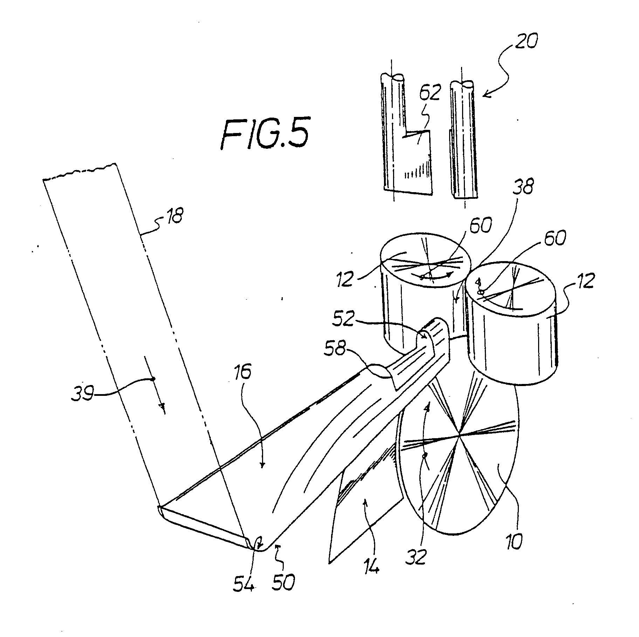

Die Führungseinrichtung 16 zum Führen und Umfalten des Abdichtbandes 18 weist einen ersten Endabschnitt 50 auf, der von den Antriebsrollen 12 entfernt und zum Führungsschwert 14 bzw. zur Führungsscheibe 10 senkrecht ausgerichtet ist. Der erste Endabschnitt 50 ist somit zur Mittelachse 30, um welche die Führungsscheibe 10 frei drehbar ist, parallel ausgerichtet. Die Führungseinrichtung 16 weist einen zweiten Endabschnitt 52 auf, der zum Zentrierschwert 14 hin umgefaltet ist, wie auch aus den Figuren 4 und 5 deutlich ersichtlich ist. Die Faltung der Führungseinrichtung 16 nimmt vom ersten Endabschnitt 50 ausgehend zum zweiten Endabschnitt 52 hin kontinuierlich zu. Der erste Endabschnitt 50 ist mit einer Abrundung 54 ausgebildet, um das Abdichtband 18 zur Unterseite 56 der Führungseinrichtung 16 zu leiten, wo das Abdichtband 18 umgefaltet wird. Die Führungsscheibe 10 dreht sich um ihre Mittelachse 30 in der durch den Pfeil 32 angedeuteten Drehrichtung. Dementsprechend sind die Antriebsrollen 12 um ihre Mittelachsen 34 bzw. 36 im Uhrzeigersinn bzw. im entgegengesetzten Uhrzeigersinn antreibbar.

Die Heizungseinrichtung 20 ist im Zufuhrabschnitt 38 der beiden Antriebswalzen 12 anordenbar, was in Fig. 2 durch den Doppelpfeil 42 angedeutet ist. Der Pfeil 39 soll in Fig. 1 die Vorschub- bzw. die Transportrichtung des Abdichtbandes 18 verdeutlichen.

Wie bereits ausgeführt worden ist, wird der aus zwei Bezugsteilen 28 bestehende, entlang der Verbindungsnaht 48 verbundene Bezug entlang der Schneide 26 des Zentrierschwertes 14 der Führungsscheibe 10 zugeführt. Gleichzeitig wird mit derselben Vorschubgeschwindigkeit das Abdichtband 18 über den ersten Endabschnitt 50 umgelenkt entlang der Unterseite 56 der Führungseinrichtung 16 in Richtung des Pfeiles 39 vorwärtsbewegt, so dass der Bezug mit seinen Bezugsteilen 28 bzw. mit seinen zur Verbindungsnaht 48 benachbarten Randabschnitten 40 gemeinsam mit dem Abdichtband 18 zwischen den beiden Antriebsrollen 12 durchgeleitet wird, wobei das umgefaltete Abdichtband 18 mit Hilfe der Antriebsrollen 12 an die Randabschnitte 40 der Bezugsteile 28 des Bezuges angepresst wird. Um zwischen dem umgefalteten Abdichtband 18 und den entlang ihrer gemeinsamen Naht 48 umgefalteten Bezugsteilen 28 eine Abdichtung zu bewirken, wird das Abdichtband 18 mittels der Heizungseinrichtung 20 mit Heissluft beaufschlagt, so dass das Abdichtband 18 anschmilzt.

Wie aus Fig. 3 ersichtlich ist, weist die Faltkante des Abdichtbandes 18 von der die Faltkante des Bezuges bildenden Naht 48 einen bestimmten Abstand auf. Durch diesen Abstand wird ein Steg gebildet, der sich beim fertigen hinterschäumten Polster nicht störend bemerkbar macht, weil er sich im Reaktionsgemisch bzw. im Polsterinneren befindet und somit zur Verankerung der Naht 48 bzw. der zur Naht 48 benachbarten Randabschnitte 40 der Bezugsteile 28 dient.

In Fig. 4 ist mit der Bezugsziffer 44 der streifenförmige Originalzustand des Abdichtbandes 18 und mit der Bezugsziffer 46 der Faltzustand des an der Unterseite 56 der Führungseinrichtung 16 verlaufenden Abdichtbandes 18 bezeichnet.

Fig. 5 zeigt in einer räumlichen Darstellung die Führungsscheibe 10, das mit der Führungsscheibe 10 fluchtende Zentrierschwert 14, die Heizungseinrichtung 20, die Führungseinrichtung 16 und die beiden Antriebsrollen 12. Die Führungseinrichtung 16 ist in der Nachbarschaft ihres zweiten Endabschnittes 52 mit einer Aussparung 58 ausgebildet, um das umgefaltete Abdichtband 18 greifen und zwischen den beiden Antriebsrollen 12 einstecken zu können. Mit den Pfeilen 60 sind die einander entgegengesetzten Drehrichtungen der beiden Antriebsrollen 12 angedeutet. Die Drehrichtungen der Antriebsrollen 12 entsprechen der durch den Pfeil 32 angedeuteten Drehrichtung der Führungsscheibe 10, so dass der aus zwei Bezugsteilen bestehende Bezug, der in Fig. 5 nicht gezeichnet ist, gemeinsam mit dem Abdichtband 18 zwischen den beiden Antriebsrollen 12 durchgeleitet werden kann.Mit Hilfe der von den Antriebsrollen 12 bzw. dem Zufuhrabschnitt 38 entfernt gezeichneten Heizungseinrichtung 20 wird das mittels der Führungseinrichtung 10 umgefaltete Abdichtband 18 angeschmolzen und mit den Randabschnitten der Bezugsteile, die in der Nachbarschaft der abzudichtenden Naht vorgesehen sind, abdichtend verbunden. Aus Fig. 5 ist ersichtlich, dass die Heizungseinrichtung 20 Heizdüsen 62 aufweist.

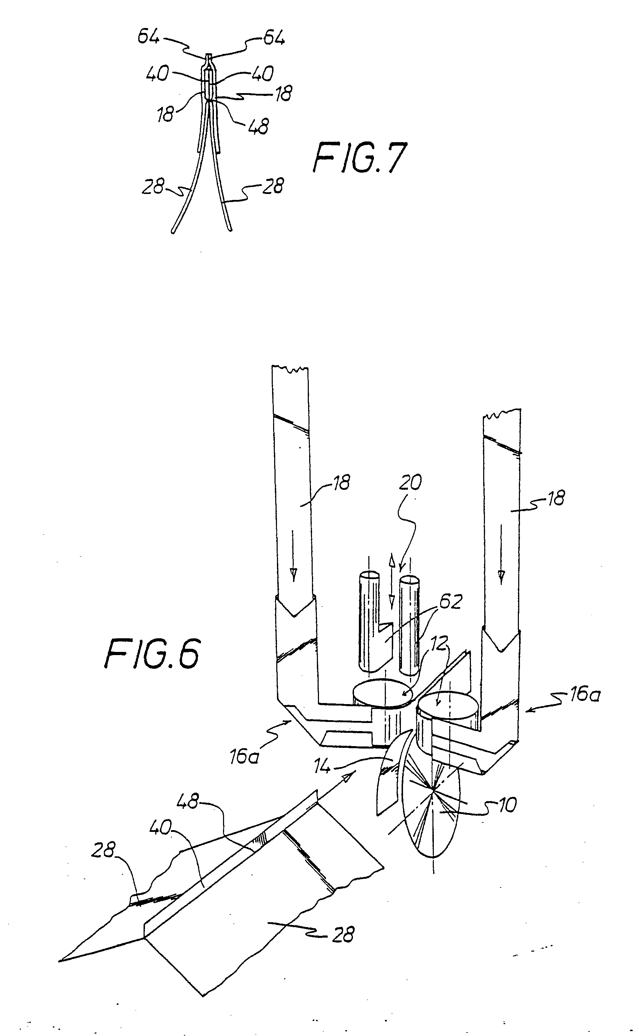

Fig. 6 zeigt in einer der Fig. 5 entsprechenden räumlichen Darstellung eine zweite Ausführungsform der Vorrichtung zum Abdichten der Verbindungsnaht zweier Bezugsteile, wobei gleiche Teile wie in Fig. 5 mit denselben Bezugsziffern bezeichnet sind. Der Unterschied zwischen der in Fig. 5 und der in Fig. 6 gezeichneten Vorrichtung besteht insbes. im Vorhandensein einer Führungseinrichtung 16a zur Zuführung zweier voneinander unabhängiger Abdichtbänder 18 zur Andrückeinrichtung 12. In der Nachbarschaft der Andrückeinrichtung 12 bzw. vor dieser ist das Zentrierschwert 14 vor der Führungsscheibe 10 angeordnet. Die entlang der Verbindungsnaht 48 miteinander verbundenen Bezugsteile 28 werden durch das Zentrierschwert 14 in Bezug auf die Andrückeinrichtung, d.h. Antriebsrollen 12 genau richtig ausgerichtet. Die Randabschnitte der Bezugsteile 28 sind auch in dieser Figur mit der Bezugsziffer 40 bezeichnet. Die Führungseinrichtung 16a dient dazu, die beiden voneinander unabhängigen Abdichtbänder 18 simultan mit den Randabschnitten 40 der Bezugsteile 28 zwischen den beiden Antriebsrollen 12 hindurchzubewegen, um die Abdichtbänder 18 abdichtend an den Randabschnitten 40 der Bezugsteile 28 zu fixieren. Zu diesem Zweck dient die mit Halsdüsen 62 versehene Heizeinrichtung 20.

Wie aus Fig. 7 deutlich ersichtlich ist, weisen die beiden voneinander unabhängigen Abdichtbänder 18 derartige Breitenabmessungen auf, dass die beiden Abdichtbänder 18 nicht nur die Randabschnitte 40 der beiden Bezugsteile 28 vollständig über die gemeisame Verbindungsnaht 48 bis zu den zur Verbindungsnaht 48 benachbarten Abschnitten der Bezugsteile 28 bedecken, sondern mit über die Randabschnitte 40 überstehenden Längsrandbereichen 64 miteinander abdichtend verbunden sind. Diese Verbindung der Längsrandbereiche 64 kann durch eine Verschweissung erfolgen, die mit der Heizeinrichtung 20 gemäss Fig. 6 bewirkt wird. Auch auf diese Weise ist eine gasdichte Abdichtung der Verbindungsnaht 48 zwischen miteinander verbundenen Bezugsteilen 28 möglich.

## Ansprüche

1. Hinterschäumtes Polsterteil mit einem mehrteiligen Bezug, dessen Bezugsteile (28) entlang einer Naht (48) unter Ausbildung von an die Naht (48) angrenzenden Randabschnitten (40) verbunden sind, wobei die Naht (48) mittels mindestens eines Abdichtbandes (18) abgedichtet ist,
**dadurch gekennzeichnet,**
dass das Abdichtband (18) zusammengefaltet ist und mit den in das Innere des Polsterteils weisenden Randabschnitten (40) der Bezugsteile abdichtend verbunden ist.

2. Hinterschäumtes Polsterteil mit einem mehrteiligen Bezug, dessen Bezugsteile (28) entlang einer Naht (48) unter Ausbildung von an die Naht (48) angepassten Randabschnitten (40) verbunden sind, wobei die Naht (48) mittels mindestens eines Abdichtbandes (18) abgedichtet ist,
**dadurch gekennzeichnet,**
dass zwei Abdichtbänder (18) vorgesehen sind, die mit den in das Innere des Polsterteils weisenden Randabschnitten (40) der Bezugsteile (28) abdichtend verbunden sind und die mit Längsrandbereichen (64) über die Randabschnitte (40) der Bezugsteile (28) überstehen und mit diesen Längsrandbereichen (64) miteinander abdichtend verbunden sind.

3. Verfahren zur Herstellung eines Polsterteils nach Anspruch 1 durch Abdichten der Nähte (48) des mehrteiligen Bezugs des hinterschäumten Polsterteils mit mindestens einem Abdichtband (18), das entlang der Naht (48) auf die an die Naht (48) angrenzenden Randabschnitte (40) der Bezugsteile (28) aufgebracht und mit den Randabschnitten (40) der Bezugsteile (28) abdichtend verbunden wird,
**dadurch gekennzeichnet,**
dass die Bezugsteile (28 mit ihren Randabschnitten (40) umgefaltet werden, wobei die Naht (48) die Faltkante bildet, dass ein Abdichtband (18) in seiner Längsrichtung umgefaltet wird, und dass das umgefaltete Abdichtband (18) an den umgefalteten Randabschnitten (40) der Bezugsteile (28) angeordnet und mit den umgefalteten Randabschnitten (40) abdichtend verbunden wird.

4. Verfahren zur Herstellung eines Polsterteils nach Anspruch 2 durch Abdichten der Nähte (48) des mehrteiligen Bezuges des hinterschäumten Polsterteils mit mindestens einem Abdichtband (18), das entlang der Naht (48) auf die an die Naht (48) angrenzenden Randabschnitte (40) der Bezugsteile (28) aufgebracht und mit den Randabschnitten (40) der Bezugsteile (28) abdichtend verbunden wird,
**dadurch gekennzeichnet,**
dass die Bezugsteile (28) mit ihren Randabschnitten (40) umgefaltet werden, wobei die Naht (48) die Faltkante bildet, und dass zwei voneinander unabhängige Abdichtbänder (18) an den umgefalteten Randabschnitten (40) der Bezugsteile (28) angeordnet und mit den umgefalteten Randabschnitten (40) der Bezugsteile (28) abdichtend verbunden werden, wobei Längsrandbereiche (64) der beiden Abdichtbänder (18) über die Randabschnitte (40) der Bezugsteile (28) überstehen und miteinander abdichtend verbunden werden.

5. Verfahren nach Anspruch 3 oder 4,
**dadurch gekennzeichnet,**
dass die Bezugsteile (28) an einem vor einer Führungsscheibe (10) angeordneten Zentrierschwert (14) umgefaltet werden, wobei die Naht (48) der Bezugsteile (28) auf die Schneide (26) des Zentrierschwertes (14) aufgelegt und der umgefaltete Bezug entlang der Schneide (26) des Zentrierschwertes (14) der Führungsscheibe (10) zugeführt wird.

6. Verfahren nach Anspruch 3 oder 5,
**dadurch gekennzeichnet,**
dass das Abdichtband (18) an einer abgewinkelten Führungseinrichtung (16) entlangbewegt und dabei umgefaltet wird, und dass die umgefalteten Be-

zugteile (28) und das die Naht (48) der Bezugsteile (28) überdeckende umgefaltete Abdichtband (18) gemeinsam mit den umgefalteten Randabschnitten (40) der Bezugsteile (28) zwischen einer Andrückeinrichtung (12) durchbewegt werden, in welcher das umgefaltete Abdichtband (18) mit den die gemeinsame Naht (48) aufweisenden Randabschnitten (40) der Bezugsteile (28) abdichtend verbunden wird.

7. Verfahren nach einem der Ansprüche 4 oder 5,
**dadurch gekennzeichnet,**
dass die beiden Abdichtbänder (18) an zugehörigen Führungseinrichtungen (16a) geführt entlangbewegt und gemeinsam mit den umgefalteten Randabschnitten (40) der Bezugsteile (28) zwischen einer Andrückeinrichtung (12) durchbewegt werden, in der die beiden Abdichtbänder (18) mit den die gemeinsame Naht (48) aufweisenden Randabschnitten (40) der Bezugsteile (28) und entlang ihrer über die Randabschnitte (40) der Bezugsteile (28) überstehenden Längsrandbereiche (64) miteinander abdichtend verbunden werden.

8. Verfahren nach einem der Ansprüche 3 bis 7,
**dadurch gekennzeichnet,**
dass die umgefalteten Bezugsteile (28) mit der gemeisamen Naht (48) und das mindestens eine Abdichtband (18) miteinander entsprechenden Vorschubgeschwindigkeiten zwischen der Andrückeinrichtung durchbewegt werden.

9. Verfahren nach Anspruch 8,
**dadurch gekennzeichnet,**
dass als Andrückeinrichtung ein Paar Antriebsrollen (12) verwendet werden, die aneinander anliegen und die sich mit einer der Vorschubgeschwindigkeit der Bezugsteile (28) und des/jedes Abdichtbandes (18) entsprechenden Geschwindigkeit gegeneinander drehen.

10. Verfahren nach einem der Ansprüche 3 bis 9,
**dadurch gekennzeichnet,**
dass das mindestens eine Abdichtband (18) mittels einer in der Nachbarschaft der Antriebsrollen (12) in deren Zufuhrabschnitt (38) vorgesehenen Heizungseinrichtung (20) erhitzt wird.

11. Vorrichtung zur Durchführung des Verfahrens nach einem der Ansprüche 3 bis 10,
**dadurch gekennzeichnet,**
dass eine Führungsscheibe (10) und ein vor der Führungsscheibe (10) angeordnetes und mit der Führungsscheibe (10) fluchtendes Zentrierschwert (14) zum Führen eines entlang seiner Naht (48) umgefalteten, aus Bezugsteilen (28) bestehenden Bezugs, eine in der Nachbarscahft des Zentrierschwertes (14) angeordnete Führungseinrichtung (16; 16a) zum Führen und Umfalten des Abdichtbandes (18), und eine Andrückeinrichtung (12) zum abdichtenden Verbinden des/jedes Abdichtbandes (18) mit den an die Naht (48) angrenzenden Randabschnitten (40) der Bezugsteile (28) vorgesehen sind, die in Vorschubrichtung der umgefalteten Bezugsteile (28) und des Abdichtbandes (18) stromabwärts hinter der Führungseinrichtung (16) und dem Zentrierschwert (14) angeordnet ist.

12. Vorrichtung nach Anspruch 11,
**dadurch gekennzeichnet,**
dass das Zentrierschwert (14) eine Schneide (26) aufweist, die mit einem Endabschnitt zu einem Einlauf-Umfangsabschnitt der Führungsscheibe (10) gerichtet ist, und dass die Andrückeinrichtung (12) die Führungsscheibe (10) entlang eines gemeinsamen, den Einlauf-Umfangsabschnitt aufweisenden Flächenabschnittes (22) überdeckt.

13. Vorrichtung nach Anspruch 11 oder 12,
**dadurch gekennzeichnet,**
dass die Andrückeinrichtung ein Paar gegenläufig antreibbare Antriebsrollen (12) aufweist, die aneinander anliegen.

14. Vorrichtung nach Anspruch 13,
**dadurch gekennzeichnet,**
dass die Antriebsrollen (12) aus einem elastisch nachgiebigen Material bestehen.

15. Vorrichtung nach Anspruch 11,
**dadurch gekennzeichnet,**
dass die Führungseinrichtung (16) zum Umfalten des Abdichtbandes (18) vorgesehen ist und einen ersten von der Führungsscheibe (10) entfernten Endabschnitt (50) aufweist, der zur Ebene der Führungsscheibe (10) mindestens annähernd senkrecht ausgerichtet ist, und dass die Führungseinrichtung (16) einen der Führungsscheibe (10) und der Andrückeinrichtung (12) zugewandten zweiten Endabschnitt (52) aufweist, der zur Führungsscheibe (10) hin umgefaltet ist, wobei das Abdichtband (18) auf der dem Zentrierschwert (14) und der Führungsscheibe (10) zugewandten Innenseite (56) der Führungseinrichtung (16) geführt ist.

16. Vorrichtung nach Anspruch 11,
**dadurch gekennzeichnet,**
dass die Führungseinrichtung (16a) zum voneinander unabhängigen Zuführen zweier Abdichtbänder (18) zur Andrückeinrichtung (12) vorgesehen ist.

17. Vorrichtung nach einem der Ansprüche 11 bis 16,
**dadurch gekennzeichnet,**
dass im Zufuhrabschnitt (38) vor den Antriebsrollen (12) in der Nachbarschaft der Führungseinrichtung (16) für das Abdichtband (18) eine Heizungseinrichtung (20) vorgesehen ist.

18. Vorrichtung nach Anspruch 17,
**dadurch gekennzeichnet,**
dass die Heizungseinrichtung (20) in einer zur Richtung der Drehachsen (34, 36) der Antriebsrollen (12) mindestens annähernd parallelen Richtung beweglich ist.

19. Vorrichtung nach Anspruch 17 oder 18,
**dadurch gekennzeichnet,**
dass die Heizungseinrichtung (20) Heizdüsen (62) aufweist, die an den beiden gegenüberliegenden Seiten des/jedes Abdichtbandes (18) und der entlang der gemeinsamen Naht (48) umgefalteten Randabschnitte (40) der Bezugsteile (28) im Zufuhrabschnitt (38) zwischen der Führungseinrichtung (16) und den Antriebsrollen (12) anordenbar sind.

FIG.1

*FIG.2*

*FIG.3*

*FIG.4*

FIG.5

FIG.7

FIG.6